Europäisches Patentamt

European Patent Office

Office européen des brevets

(19)

(11) Veröffentlichungsnummer: **0 134 275**
**B1**

(12) # EUROPÄISCHE PATENTSCHRIFT

(45) Veröffentlichungstag der Patentschrift:
05.11.86

(21) Anmeldenummer: 83108379.5

(22) Anmeldetag: 25.08.83

(51) Int. Cl.⁴: **B 62 D 33/02, E 05 C 1/14**

(54) Verriegelungsvorrichtung für Bordwände von Nutzfahrzeugen.

(43) Veröffentlichungstag der Anmeldung:
20.03.85 Patentblatt 85/12

(45) Bekanntmachung des Hinweises auf die Patenterteilung:
05.11.86 Patentblatt 86/45

(84) Benannte Vertragsstaaten:
AT DE NL

(56) Entgegenhaltungen:
EP-A-0 054 825
FR-A-2 247 105
FR-A-2 254 706
GB-A-933 427

(73) Patentinhaber: F. HESTERBERG & SÖHNE GmbH
& Co. KG, Heilenbecker Strasse 50- 60, D-5828
Ennepetal 1 (DE)

(72) Erfinder: Feinbier, Joachim, Berliner Strasse 65,
D-5800 Hagen 7 (DE)

(74) Vertreter: Kneissl, Richard, Dr., Patentanwälte
Andrae, Flach, Haug, Kneissl Steinstrasse 44,
D-8000 München 80 (DE)

## Beschreibung

Die Erfindung betrifft eine Verriegelungsvorrichtung für eine abklappbare Bordwand an einer Bordwandecke von Nutzfahrzeugen, insbesondere von Fahrzeugkleinanhängern, welche Vorrichtung ein Gehäuse aufweist, an dem ein Handhebel angelenkt ist und in dem ein durch den Handhebel gegen den Druck einer am Gehäuse abgestützten Feder zurückziehbares Verriegelungselement gelagert ist, das gegen ein Gegenelement, das seitlich von einer Grundplatte absteht, verriegelbar ist.

Bei dieser aus der EP-A- 54 825 bekannten Vorrichtung ist das zurückziehbare Verriegelungselement als an seiner Spitze abgeschrägter Rundriegel ausgebildet, der im Gehäuse linear gegen den Druck einer Feder geführt ist und der in einem als Öse ausgebildeten Gegenelement einrasten kann. Der Handhebel ist mittels einer Achse am Gehäuse gelagert und besitzt seitlich von der Achse angeordnete Mitnehmer, die beim Verschwenken des Handhebels den Rundriegel zurückziehen, wodurch ein Öffnen der Verriegelungsvorrichtung ermöglicht wird.

Nachteilig an dieser bekannten Verriegelungsvorrichtung ist ihr verhältnismäßig komplizierter Aufbau. Der Erfindung lag die Aufgabe zugrunde, eine solche Verriegelungsvorrichtung sowohl hinsichtlich der Form der Teile als auch der Anzahl der Teile wesentlich zu vereinfachen.

Diese Aufgabe wird gemäß der Erfindung dadurch gelöst, daß bei einer Verriegelungsvorrichtung der eingangs näher bezeichneten Art die in Langlöchern der Seitenwände des Gehäuses dreh- und linear bewegbare Anlenkachse des Handhebels als Verriegelungselement dient, daß das Gegenelement als gegen die Anlenkachse weisender Haken ausgebildet ist und daß an der hinteren Seite des Gehäuses mindestens eine Anlagefläche für einen am Handhebel angeordneten Anlagezapfen vorgesehen ist, die so eformt ist, daß beim Verschwenken des Handhebels in Öffnungsrichtung die Anlenkachse des Handhebels in den Langlöchern und aus dem Haken (12) zurückgezogen wird.

Die erfindungsgemäße Verriegelungsvorrichtung läßt sich aus einer kleinen Anzahl von Teilen herstellen, die noch dazu einfach anzufertigen sind, weil sie sich alle auf einer Stanze herstellen lassen. Bei der erfindungsgemäßen Vorrichtung erfüllt die Anlenkachse eine mehrfache Funktion. Sie dient nicht nur als Anlenkachse, sondern gleichzeitig als Riegel. Außerdem hält sie die ganze Vorrichtung zusammen. Beim Zusammenbau werden nämlich die einzelnen Teile zusammengesteckt, wobei zuletzt die Anlenkachse eingefügt und am Handhebel befestigt, beispielsweise vernietet, wird.

Die Anlagefläche an der hinteren Seite des Gehäuses kann die verschiedensten Formen aufweisen. Es muß nur sichergestellt sein, daß beim Verschwenken des Handhebels, beispielsweise durch Hochziehen oder Niederdrücken, der Handhebel gegen den Druck der Feder zurückgezogen wird. Bei einer bevorzugten Ausführungsform verläuft die Anlagefläche von schräg unten nach hinten oben, so daß die Anlenkachse beim Ausschwenken des Handhebels zurückgezogen wird. Es wird dabei bevorzugt, daß die Anlagefläche zuerst mehr nach hinten und dann mehr nach oben verläuft. Hierdurch wird die Niederhaltung des Handhebels verbessert.

Bei einer weiteren bevorzugten Ausführungsform ist auf dem als Gegenelement dienenden Haken eine zur Spitze des Hakens geneigte Auflauffläche ausgebildet, so daß es beim Schließen des Verschlusses nicht nötig ist, den Handhebel zu betätigen, d.h. also, daß der Verschluß von selbst einschnappt.

Eine Ausführungsform der erfindungsgemäßen Verriegelungsvorrichtung wird nun anhand der beigefügten Zeichnungen näher erläutert.

In den Zeichnungen zeigen:

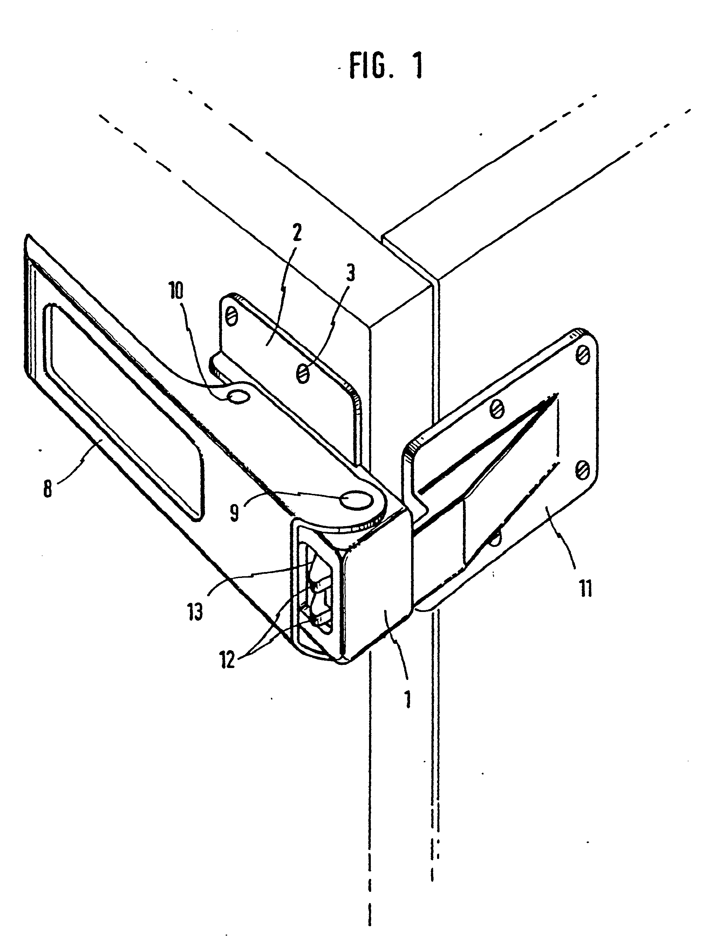

Fig. 1 eine perspektivische Darstellung der erfindungsgemäßen Verriegelungsvorrichtung;

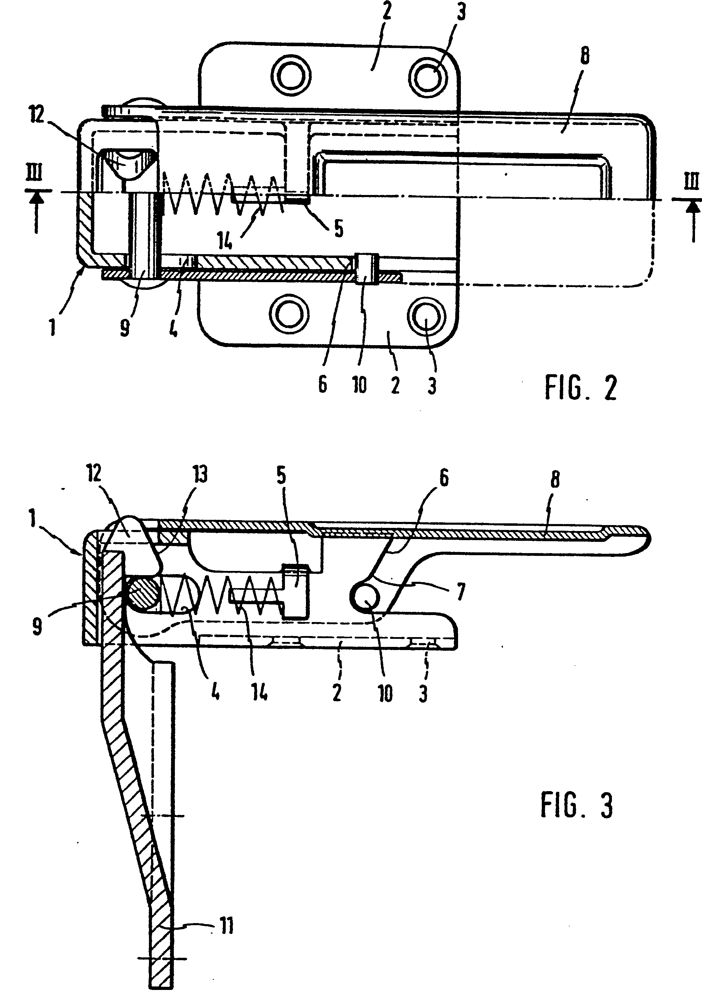

Fig. 2 eine teilweise aufgeschnittene Aufsicht auf ein Element der Verriegelungsvorrichtung; und

Fig. 3 eine geschnittene Seitenansicht der Verriegelungsvorrichtung.

Die Verriegelungsvorrichtung besitzt ein durch Stanzen und Abkanten hergestelltes Gehäuse 1 aus dickem Stahlblech, das an seiner der Bordwand zugekehrten Seite Flansche 2 mit Löchern 3 für die Aufnahme von Befestigungsschrauben aufweist. In den Seitenwandungen des Gehäuses 1 sind Langlöcher 4 ausgebildet. Des weiteren ist an einer inneren Seitenwand eine Federstütze 5 vorgesehen. Am hinteren Teil des Gehäuses sind zwei Anlageflächen 6 vorgesehen, die in ihrem unteren Teil einen Knick 7 aufweisen. Zur Betätigung des Verschlusses dient ein Handhebel 8, der mittels einer Anlenkachse 9, die durch die Langlöcher 4 hindurchgeht, schwenk- und linear verschiebbar ist. Außerdem besitzt der Handhebel 8 gegeneinander gerichtete Anlagezapfen 10, die an den Anlageflächen 6 anliegen.

Das Gegenelement besteht aus einer durch Stanzen eines dicken Stahlblechs hergestellten Grundplatte 11, an der ein doppelter Haken 12 ausgebildet ist, welcher Auflaufflächen 13 besitzt. Eine Feder 14 stützt sich einerseits an der Federstütze 5 des Gehäuses 1 und andererseits an der Anlenkachse 9 ab.

Beim Öffnen des Verschlusses durch Schwenken des Handhebels 8 laufen die Anlagezapfen 10 an den Anlageflächen 6 ab, wobei die Anlenkachse 9 gegen den Druck der Feder 14 zurückgezogen wird, so daß der Haken 12 freigegeben wird. Das Schließen der Bordwand kann durch Hochschlagen derselben geschehen, wobei die Anlenkachse 9 auf den Auflaufflächen 13 des Hakens 12 abgleitet, wodurch die Anlenkachse 9 gegen den Druck der Feder 14 zurückgeschoben wird. Gegen Ende dieser Bewegung schnappt die Anlenkachse 9 in den Haken 12 ein, wodurch es zu einer Verriegelung kommt. Da die Anlageflächen 6 einen Knick 7 aufweisen und die Anlageflächen also im unteren Teil mehr waagrecht verlaufen, kommt es zu einer verbesserten Niederhaltung des Handhebels 8.

Die Anlageflächen 6 können gegebenenfalls so geformt werden, daß beim Öffnen des Handhebels dieser erst etwas zurückgezogen werden muß, bevor er ausgeschwenkt werden kann. Dies erhöht die Sicherheit der Verriegelungsvorrichtung.

**Patentansprüche**

1. Verriegelungsvorrichtung für eine abklappbare Bordwand an einer Bordwandecke von Nutzfahrzeugen, insbesondere von Fahrzeugkleinanhängern, welche Vorrichtung ein Gehäuse (1) aufweist, an dem ein Handhebel (8) angelenkt ist und in dem ein durch den Handhebel (8) gegen den Druck einer am Gehäuse (1) abgestützten Feder (14) zurückziehbares Verriegelungselement (9) gelagert ist, das gegen ein Gegenelement (12), das seitlich von einer Grundplatte (11) absteht, verriegelbar ist, dadurch gekennzeichnet, daß die in Langlöchern (4) der Seitenwände des Gehäuses (1) dreh- und linear bewegbare Anlenkachse (9) des Handhebels (8) als Verriegelungselement dient, daß das Gegenelement als gegen die Anlenkachse (9) weisender Haken (12) ausgebildet ist und daß an der hinteren Seite des Gehäuses (1) mindestens eine Anlagefläche für einen am Handhebel (8) angeordneten Anlagezapfen (10) vorgesehen ist, die so geformt ist, daß beim Verschwenken des Handhebels (8) in Öffnungsrichtung die Anlenkachse (9) des Handhebels (8) in den Langlöchern (4) und aus dem Haken (12) zurückgezogen wird.

2. Verriegelungsvorrichtung nach Anspruch 1, dadurch gekennzeichnet, daß die Anlagefläche (6) an der hinteren Seite des Gehäuses (1) von unten schräg nach hinten oben verläuft.

3. Verriegelungsvorrichtung nach Anspruch 2, dadurch gekennzeichnet, daß die Anlagefläche (6) zuerst mehr nach hinten und dann mehr nach oben verläuft.

4. Verriegelungsvorrichtung nach einem der vorhergehenden Ansprüche, dadurch gekennzeichnet, daß der als Gegenelement dienende Haken (12) eine zur Spitze des Hakens (12) geneigte Auflauffläche (13) aufweist.

**Claims**

1. Locking means for a folding board panel at a board panel corner of utility vehicles, in particular vehicle small trailers, said means comprising a housing (1) to which a hand lever (8) is articulated and in which a locking element (9) is mounted which is retractable by the hand lever (8) against the force of a spring (14) bearing on the housing (1) and which is lockable against a counter element (12) which projects laterally from a base plate (11), characterized in that the articulation pin (9) of the hand lever (8) rotatably and linearly movable in slots (4) of the side walls of the housing (1) serves as locking element, that the counter element is formed as hook (12) pointing towards the articulation pin (9) and that at the rear side of the housing (1) at least one engagement surface is provided for an engagement stud (10) disposed on the hand lever (8), said surface being formed in such a manner that on pivoting of the hand lever (8) in the opening direction the articulation pin (9) of the hand lever (8) is withdrawn into the slots (4) and out of the hook (12).

2. Locking means according to claim 1, characterized in that the engagement surface (6) extends from below inclined upwardly at the rear side of the housing (1).

3. Locking means according to claim 2, characterized in that the engagement surface (6) extends firstly more to the rear and then more upwardly.

4. Locking means according to any one of the preceding claims, characterized in that the hook (12) serving as counter element has an engagement surface (13) inclined to the tip of the hook (12).

**Revendications**

1. Dispositif de verrouillage pour une ridelle rabattable sur un coin de ridelles de véhicule utilitaire, en particulier de petite remorque de véhicule, ce dispositif comportant un boîtier (1), auquel une manette (8) est articulée et dans lequel est logé un élément de verrouillage (9), rétractable à travers la manette (8) contre la pression d'un ressort (14) appuyé au boîter (1), l'élément de verrouillage (9) étant verrouillable contre un élément antagoniste (12), dépassant latéralement d'une plaque de base (11), caractérisé en ce que le pivot (9) de manette (8), qui peut tourner et se déplacer linéairement dans des trous longs (4) des parois latérales du boîtier (1), sert d'élément de verrouillage; que l'élément antagoniste est conçu comme un crochet (12) dirigé contre le pivot (9) et qu'il est prévu à l'arrière du boîtier (1) au moins une surface d'appui pour un doigt d'appui (10) placé sur la manette (8) et ayant une forme telle qu'au moment du pivotement de la manette (8) dans le sens de l'ouverture, le pivot (9) de la manette (8) soit ramené dans les trous longs (4) et hors du crochet (12).

2. Dispositif de verrouillage suivant la revendication 1 caractérisé en ce que la surface d'appui (6) placée à l'arrière du boîtier (1) s'étend en biais du bas vers le haut de l'arrière.

3. Dispositif de verrouillage suivant la revendication 2, caractérisé en ce que la surface d'appui (6) s'étend d'abord plus vers l'arrière et ensuite plus vers le haut.

4. Dispositif de verrouillage suivant une des revendications précédentes, caractérisé en ce que le crochet (12) servant d'élément antagoniste présente une rampe (13) inclinée vers la pointe du crochet (12).

# FIG. 1

FIG. 2

FIG. 3